# EUROPEAN PATENT APPLICATION

(11) **EP 3 163 950 A1**
(43) Date of publication of application: **03.05.2017**
(21) Application number: 16194979.7
(22) Date of filing: 21.10.2016
(51) Int. Cl.: H04W 52/14, H04W 52/24

(54) **BASE STATION APPARATUS AND METHOD**

(30) Priority: 02.11.2015 JP 2015215453
(71) Applicant: FUJITSU LIMITED, Kawasaki-shi Kanagawa 211-8588 (JP)
(72) Inventor: KOBAYASHI, Kazuya, Kawasaki-shi, Kanagawa 211-8588 (JP); ONO, Yoshiyuki, Kawasaki-shi, Kanagawa 211-8588 (JP); IIZUKA, Shunsuke, Kawasaki-shi, Kanagawa 211-8588 (JP)
(74) Representative: Schultes, Stephan

(57) **Abstract**

An apparatus includes a memory and a processor coupled to the memory. The processor is configured to execute reception processing. The reception processing includes a process of receiving a signal from a target terminal among a plurality of terminals by a control channel adapted to multiplexing the signal transmitted from the target terminal with one or more of signals transmitted from any of the plurality of terminals except for the target terminal, and a process of performing automatic frequency control, based on the signal received from the target terminal, for a data signal received from the target terminal. The processor is configured to execute adjustment processing. The adjustment processing includes a process of performing adjustment of a first transmission power of the signal in the target terminal based on a second transmission power of the one or more of signals in the any of the plurality of terminals.

## Description

### FIELD

The present disclosure relates generally to wireless communication, and more specifically a base station apparatus capable of wirelessly communicating with a plurality of user terminals.

### BACKGROUND

Conventionally, a technique is known that adjusts transmission power of a signal in a radio communication system when throughput of a reception signal drops. Also, automatic frequency control (AFC) is known that compensates for frequency deviation of a transmission signal from a terminal device by using a signal periodically transmitted from the terminal device to a base station apparatus. As the signal periodically transmitted from the terminal device to the base station apparatus, for example, a channel quality indicator (CQI) is used.

### SUMMARY

The conventional techniques mentioned have a problem that, for example, when CQIs from many terminal devices are multiplexed in high density in the same timing of the uplink control channel, interference among the CQIs increases and thereby causes decrease in the AFC accuracy based on the CQI.

It would therefore be desirable to reduce decrease in the accuracy of the AFC.

According to an aspect of the invention, an apparatus includes a memory and a processor coupled to the memory. The processor included in the apparatus is configured to execute reception processing. The reception processing includes a process of receiving a predetermined signal from a target terminal device among a plurality of terminal devices by a control channel, the control channel being adapted to multiplexing the predetermined signal transmitted from the target terminal device with one or more of predetermined signals transmitted from any of the plurality of terminal devices except for the target terminal, and a process of performing automatic frequency control, based at least in part on the predetermined signal received from the target terminal device, for a data signal received from the target terminal device. The processor included in the apparatus is configured to execute adjustment processing. The adjustment processing includes a process of performing adjustment of a first transmission power of the predetermined signal in the target terminal device based at least in part on a second transmission power of the one or more of predetermined signals in the any of the plurality of terminal devices.

According to an aspect of the present disclosure, the technique disclosed herein provides an advantageous effect of suppressing decrease in the accuracy of the AFC.

### BRIEF DESCRIPTION OF DRAWINGS

FIG. 1 illustrates an example of a communication system according to an embodiment;
FIG. 2 illustrates an example of a base station apparatus according to the embodiment;
FIG. 3 illustrates an example of a hardware configuration of the base station apparatus according to the embodiment;
FIG. 4 illustrates an example of a terminal device according to the embodiment;
FIG. 5 illustrates an example of a hardware configuration of the terminal device according to the embodiment;
FIG. 6 illustrates an example of a radio communication system according to the embodiment;
FIG. 7 illustrates an example of a UE movement in the radio communication system according to the embodiment;
FIG. 8 illustrates an example of an uplink bandwidth in the radio communication system according to the embodiment;
FIG. 9 illustrates an example of an interference of a PUCCH in the radio communication system according to the embodiment;
FIG. 10 illustrates an example of a processing timing in the radio communication system according to the embodiment;
FIG. 11 is a flowchart illustrating an example of a power adjustment processing by an eNB according to the embodiment;
FIG. 12 is a flowchart illustrating an example of a processing of adjustment of increasing a CQI transmission power of a target UE by the eNB according to the embodiment;
FIG. 13 is a flowchart illustrating an example of a processing of power adjustment (up) based on a target power by the eNB according to the embodiment;
FIG. 14 is a flowchart illustrating an example of another processing of power adjustment (up) based on the target power by the eNB according to the embodiment;
FIG. 15 is a flowchart illustrating an example of a processing of adjustment of decreasing the CQI transmission power of the target UE by the eNB according to the embodiment;
FIG. 16 is a flowchart illustrating an example of a power adjustment (down) processing by the eNB according to the embodiment;
FIG. 17 is a flowchart illustrating an example of a power adjustment check processing by the eNB according to the embodiment (Part 1);
FIG. 18 is a flowchart illustrating an example of a power adjustment check processing by the eNB according to the embodiment (Part 2); and
FIG. 19 is a diagram illustrating an example of information of UEs stored by the eNB according to the embodiment.

### DESCRIPTION OF EMBODIMENTS

Hereinafter, embodiments of the base station apparatus according to the present disclosure are described in detail with reference to the accompanying drawings.

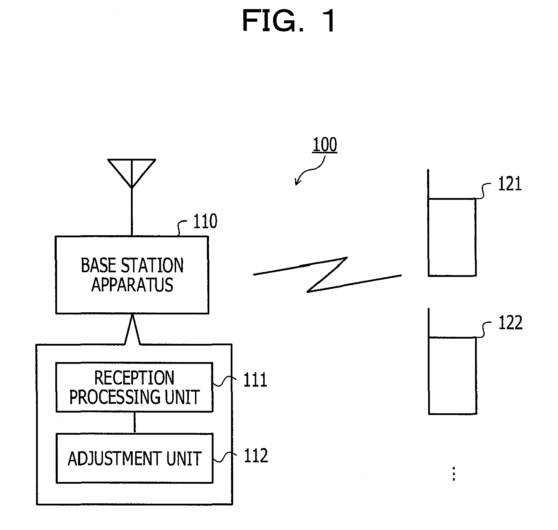

FIG. 1 is a diagram illustrating an example of a communication system according to the embodiment. As illustrated in FIG. 1, a communication system 100 according to the embodiment includes a base station apparatus 110 and terminal devices 121, 122, .... The terminal devices 121, 122, ... are terminal devices capable of performing radio communication with the base station apparatus 110. An example depicted in FIG. 1 illustrates a state in which a plurality of terminal devices (the terminal devices 121, 122, ...) perform radio communication with the base station apparatus 110. The number of terminal devices performing radio communication with the base station apparatus 110 may be one or zero depending on the movement state of each terminal device.

Also, the terminal devices 121, 122, ... are terminal devices which multiplex and transmit a predetermined signal to the base station apparatus 110 through an uplink control channel in the same timing. For example, the base station apparatus 110 sets, to each terminal device coupling to the cell thereof, a timing of transmitting a predetermined signal to the base station apparatus 110. In this case, the terminal devices 121, 122, ... are terminal devices to which the same timing is set by the base station apparatus 110, among terminal devices coupled to the cell of the base station apparatus 110.

The uplink control channel is, by way of an example, a physical uplink control channel (PUCCH). The predetermined signal is, for example, a control signal which is periodically transmitted from the terminal devices 121, 122, ... to the base station apparatus 110 through the uplink control channel. By way of an example, the predetermined signal is CQI. In the description below, the uplink control channel is a PUCCH, and the predetermined signal is a signal including CQI.

The base station apparatus 110 comprises a reception processing unit 111 and an adjustment unit 112. The reception processing unit 111 receives the CQI from a target terminal device among the terminal devices 121, 122, ... through a PUCCH. The target terminal device is a terminal device for which transmission power of the CQI is adjusted. In this case, assume that the terminal device 121 out of the terminal devices 121, 122, ... is a target terminal device.

The reception processing unit 111 performs the AFC for a data signal received from the terminal device 121 based on the CQI received from the terminal device 121. For example, the reception processing unit 111 estimates frequency deviation of the CQI received from the terminal device 121. The frequency deviation is a deviation from the target value in the frequency of the signal transmitted from the terminal device 121 to the base station apparatus 110. The deviation is caused, for example, due to low accuracy of the oscillator used for generating the transmission signal.

The reception processing unit 111 compensates for the frequency deviation in the data signal received from the terminal device 121 based on the estimated frequency deviation. Thus, the frequency deviation in the data signal received from the terminal device 121 may be compensated for, and thereby reception quality of the data signal may be improved. The reception processing unit 111 may notify the adjustment unit 112 of the reception quality based on demodulation result of the data signal whose the frequency deviation is compensated for.

The adjustment unit 112 adjusts transmission power of the CQI in the terminal device 121, based on the transmission power of the CQI in the terminal devices 122, ... among the terminal devices 121, 122, ..., which is different from the terminal device 121. At that time, the adjustment unit 112 may adjust transmission power of CQI in the terminal device 121 or transmission power of the PUCCH including the CQI in the terminal device 121, and may not adjust transmission power of the data signal in the terminal device 121.

For example, when reception quality notified by the reception processing unit 111 is lower than a predetermined reception quality, the adjustment unit 112 identifies a terminal device having a largest transmission power of the CQI among the terminal devices 122, .... Then, the adjustment unit 112 performs adjustment of increasing the CQI transmission power in the terminal device 121 based on the CQI transmission power in the identified terminal device. By way of an example, the adjustment unit 112 performs adjustment of increasing the CQI transmission power in the terminal device 121 such that the CQI transmission power in the terminal device 121 becomes equal to (closer to) the CQI transmission power of the identified terminal device.

Further, when reception quality notified by the reception processing unit 111 is higher than a predetermined reception quality, the adjustment unit 112 may perform adjustment of decreasing the CQI transmission power in the terminal devices 121. In this case, for example, when the CQI transmission power in the terminal device 121 is largest among CQIs of the terminal devices 121, 122, ..., the adjustment unit 112 performs adjustment of decreasing the CQI transmission power in the terminal device 121. Further, when the CQI transmission power in the terminal device 121 is not largest among CQIs of the terminal devices 121, 122, ..., the adjustment unit 112 may not perform the adjustment of decreasing the CQI transmission power in the terminal device 121.

As described above, the base station apparatus 110 according to the embodiment adjusts the CQI transmission power from the terminal device 121 based on the CQI transmission power from the terminal devices 122, ... whose CQI transmission timing is the same as the terminal device 121. Thus, transmission powers of CQIs multiplexed in the same timing may be matched, and thereby interference among CQIs due to difference in the transmission power of CQIs multiplexed in the same timing may be reduced. Thus, decrease in the AFC accuracy based on the CQI may be suppressed.

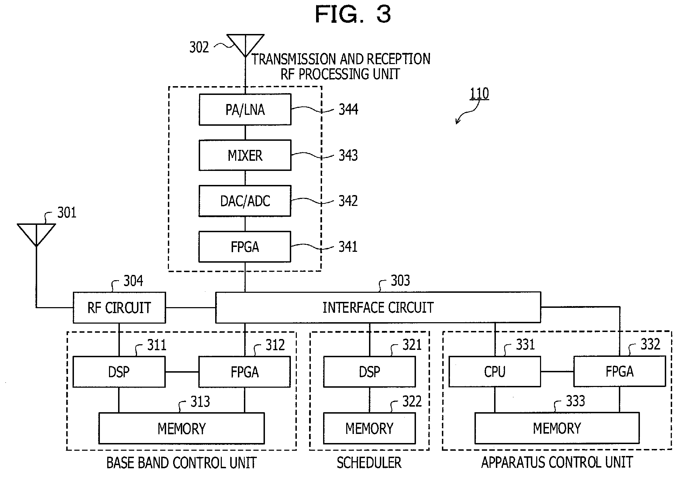

The reception processing unit 111 and the adjustment unit 112 of the base station apparatus 110 may be formed as the same circuit or as a separate circuit respectively. Alternatively, the reception processing unit 111 and the adjustment unit 112 may be mounted in the base station apparatus 110 as one or more integrated circuits in which circuits corresponding to those components are integrated. Those components of the base station apparatus 110 may be a function module implemented by a computer program executed on a processor of the base station apparatus 110. For example, with a computer program stored in a memory of the base station apparatus 110 being executed on one or more processors, one or more processors of the base station apparatus 110 may operate as a hardware circuit which is capable of executing a whole or a part of processes of components illustrated in FIG. 1. For example, the processor of the base station apparatus 110 includes a central processing unit (CPU), a micro processing unit (MPU), and a field-programmable gate array (FPGA). The processor may be a multiprocessing unit incorporating multiple processor cores or may be any processor core incorporated into the multiprocessing unit. An example of those processors is illustrated in FIG. 3.

Although adjustment of the CQI transmission power is described based on the terminal device 121 among the terminal devices 121, 122, ... as the target terminal device, the adjustment unit 112 also may adjust the CQI transmission power by using a terminal device out of the terminal devices 122, ... as the target terminal device.

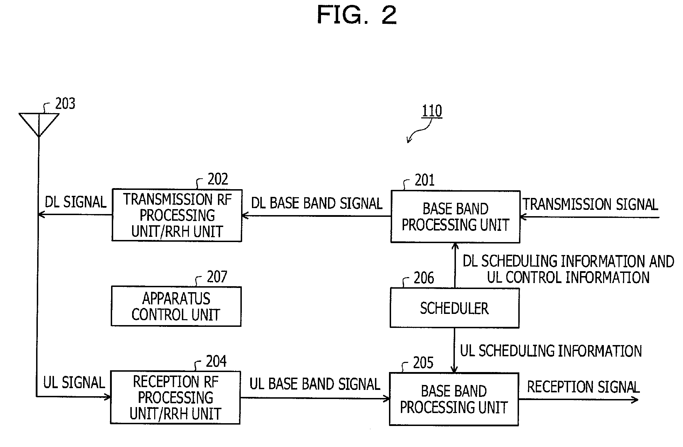

FIG. 2 illustrates an example of a base station apparatus according to the embodiment. As illustrated in FIG. 2, the base station apparatus 110 according to the embodiment comprises base band processing units 201, 205, a transmission RF processing unit/RRH unit 202, an antenna 203, a reception RF processing unit/RRH unit 204, a scheduler 206, and an apparatus control unit 207.

The base band processing unit 201 performs base band processing for a downlink (DL) transmission signal which the base station apparatus 110 transmits, and outputs a DL base band signal obtained by the base band processing to the transmission RF processing unit/RRH unit 202. Further, the base band processing unit 201 performs the base band processing based on DL scheduling information and uplink (UL) control information notified by the scheduler 206. The UL control information includes a transmission power control (TPC) value instructing, for example, an adjustment to the CQI transmission power with respect to the terminal devices 121, 122, .... The base band processing unit 201 gives the UL control information outputted from the scheduler 206 to the DL base band signal.

The transmission RF processing unit/RRH unit 202 performs RF processing and remote radio head (RRH) processing for the DL base band signal outputted from the base band processing unit 201. For example, the transmission RF processing unit/RRH unit 202 performs transmission RF processing for the DL base band signal outputted from the base band processing unit 201, such as conversion from the digital signal to the analog signal and conversion and amplification from the base band frequency to the RF frequency. Then, the transmission RF processing unit/RRH unit 202 outputs the DL signal obtained by the transmission RF processing to the antenna 203.

When the antenna 203 is located apart from a main body of the base station apparatus 110, the transmission RF processing unit/RRH unit 202 is a RRH installed apart from the main body of the base station apparatus 110, along with the antenna 203. In this case, the DL base band signal outputted from the base band processing unit 201 is transmitted to the transmission RF processing unit/RRH unit 202 via interface such as a common public radio interface (CPRI). The transmission RF processing unit/RRH unit 202 performs the transmission RF processing for the DL base band signal transmitted via interface. Then, the transmission RF processing unit/RRH unit 202 outputs the DL signal obtained by the transmission RF processing to the antenna 203.

The antenna 203 transmits the DL signal outputted from the transmission RF processing unit/RRH unit 202 to the terminal devices 121, 122, ... by radio. Further, the antenna 203 receives a UL signal transmitted from the terminal devices 121, 122, ... by radio and outputs the received UL signal to the reception RF processing unit/RRH unit 204.

The reception RF processing unit/RRH unit 204 performs RF processing and RRH processing for the UL signal outputted from the antenna 203. For example, the reception RF processing unit/RRH unit 204 performs reception RF processing for the UL signal outputted from the antenna 203, such as amplification, conversion from the RF frequency to the base band frequency, and conversion from the analog signal to the digital signal. Then, the reception RF processing unit/RRH unit 204 outputs the UL base band signal obtained by the reception RF processing to the base band processing unit 205.

When the antenna 203 is located apart from the main body of the base station apparatus 110, the reception RF processing unit/RRH unit 204 is a RRH installed apart from the main body of the base station apparatus 110, along with the antenna 203. In this case, the UL base band signal obtained by the reception RF processing in the reception RF processing unit/RRH unit 204 is transmitted to the base band processing unit 205 via interface such as CPRI.

The base band processing unit 205 performs base band processing for the UL base band signal outputted from the reception RF processing unit/RRH unit 204. The base band processing by the base band processing unit 205 includes the AFC which estimates a frequency deviation in the signal from the base station apparatus 110 and compensates for, based on an estimated frequency deviation, the frequency deviation in the signal from the base station apparatus 110. Further, the base band processing unit 205 performs base band processing based on UL scheduling information notified by the scheduler 206. The base band processing unit 205 outputs a reception signal obtained by base band processing.

The scheduler 206 performs uplink (UP) and downlink (DL) scheduling in the base station apparatus 110. Then, the scheduler 206 outputs DL scheduling information indicating the result of the downlink scheduling to the base band processing unit 201. Further, the scheduler 206 outputs UL scheduling information indicating the result of the uplink scheduling to the base band processing unit 205.

Further, the scheduler 206 performs a process of adjusting the CQI transmission power by the terminal devices 121, 122, ... for the uplink. For example, the scheduler 206 generates a TPC value for adjusting CQI transmission power by the terminal devices 121, 122, ..., based on reception quality of a reception signal obtained by the AFC of the base band processing unit 205. Then, the scheduler 206 outputs UL control information including the generated TPC value to the base band processing unit 201 and thereby transmits UL control information including the TPC value to the terminal devices 121, 122,

The apparatus control unit 207 controls operation of processing units of the base station apparatus 110 such as the base band processing unit 201, the transmission RF processing unit/RRH unit 202, the reception RF processing unit/RRH unit 204, the base band processing unit 205, and the scheduler 206.

The reception processing unit 111 illustrated in FIG. 1 may be implemented, for example, by the base band processing unit 205. The adjustment unit 112 illustrated in FIG. 1 may be implemented, for example, by the scheduler 206.

FIG. 3 is a diagram illustrating an example of a hardware configuration of the base station apparatus according to the embodiment. As illustrated in FIG. 3, the base station apparatus 110 according to the embodiment comprises antennas 301, 302, an interface circuit 303, a RF circuit 304, DSPs 311, 321, and FPGAs 312, 332, 341. Further, the base station apparatus 110 comprises memories 313, 322, 333, a CPU 331, a DAC/ADC 342, a mixer 343, and a PA/LNA 344.

The interface circuit 303 is a circuit which implements an interface coupling the RF circuit 304, the FPGA 312, the DSP 321, the CPU 331, and the FPGA 332 with each other. DSPs 311, 321 are digital signal processors (DSP) configured to perform arithmetic operation by using the memory 313 and the memory 322 respectively. The FPGAs 312, 332 are field programmable gate arrays (FPGA) configured to perform arithmetic operation by using the memory 313 and the memory 333 respectively. The CPU 331 is a central processing unit (CPU) configured to perform arithmetic operation by using the memory 333.

Each of the memories 313, 322, 333 includes, for example, a main memory and an auxiliary memory. The main memory is, for example, a random access memory (RAM). The main memory is used as a work area of the DSPs 311, 321 or the CPU 331. The auxiliary memory is a non-volatile memory such as, for example, a magnetic disk, an optical disk and a flush memory. The auxiliary memory stores programs for operating the base station apparatus 110. Programs stored in the auxiliary memory are loaded into the main memory and executed by the DSPs 311, 321 or the CPU 331.

The antenna 203 illustrated in FIG. 2 may be implemented, for example, by either of the antennas 301, 302. For example, in a case where the antenna 203 is provided in the vicinity of the main body of the base station apparatus 110, the antenna 203 may be implemented by the antenna 301. Also, in a case where the antenna 203 is provided apart from the main body of the base station apparatus 110, the antenna 203 may be implemented by the antenna 302.

The base band processing units 201, 205 illustrated in FIG. 2 may be implemented, for example, by the DSP 311, the FPGA 312 and the memory 313. The scheduler 206 illustrated in FIG. 2 may be implemented, for example, by the DSP 321 and the memory 322. The apparatus control unit 207 illustrated in FIG. 2 may be implemented, for example, by the CPU 331, the FPGA 332 and the memory 333.

When performing radio communication with the terminal devices 121, 122, ... by the antenna 301, the transmission RF processing unit/RRH unit 202 illustrated in FIG. 2 may be implemented, for example, by the RF circuit 304. For example, the RF circuit 304 includes circuits of devices such as converters and amplifiers performing transmission RF processing by the transmission RF processing unit/RRH unit 202 and reception RF processing by the reception RF processing unit/RRH unit 204 illustrated in FIG. 2. In this case, the antenna 301 transmits the DL signal outputted from the RF circuit 304 to the terminal devices 121, 122, ... by radio. Further, the antenna 301 receives the UL signal transmitted from the terminal devices 121, 122, ... by radio and outputs the received UL signal to the RF circuit 304.

When performing radio communication with the UE by the antenna 302, the transmission RF processing unit/RRH unit 202 illustrated in FIG. 2 may be implemented, for example, by the FPGA 341, the DAC/ADC 342, the mixer 343, and the PA/LNA 344. The FPGA 341 receives, via interface such as the CPRI, a DL base band signal outputted from the DSP 311 or the FPGA 312 via the interface circuit 303, and outputs the received DL base band signal to the DAC/ADC 342. Further, the FPGA 341 transmits, via interface such as the CPRI, an UL base band signal outputted from the DAC/ADC 342 to the DSP 311 or the FPGA 312 via the interface circuit 303.

The DAC/ADC 342 includes a digital/analog converter (DAC) which converts the DL base band signal outputted from the FPGA 341 from the digital signal to the analog signal. The DAC/ADC 342 outputs the DL base band signal converted to the analog signal by the DAC to the mixer 343. The DAC/ADC 342 also includes an analog/digital converter (ADC) which converts the UL base band signal outputted from the mixer 343 from the analog signal to the digital signal. The DAC/ADC 342 outputs the UL base band signal converted to the digital signal by the ADC to the FPGA 341.

The mixer 343 converts the DL base band signal outputted from the DAC/ADC 342 from the base band frequency to the RF frequency, and outputs the DL signal converted to the RF frequency to the PA/LNA 344. The mixer 343 converts the UL base band signal outputted from the PA/LNA 344 from the RF frequency to the base band frequency, and outputs the UL base band signal converted to the base band frequency to the DAC/ADC 342.

The PA/LNA 344 includes a power amplifier (PA) which amplifies the DL signal outputted from the mixer 343. The PA/LNA 344 outputs the DL signal amplified by the PA to the antenna 302. The PA/LNA 344 also includes a low noise amplifier (LNA) which amplifies the UL signal outputted from the antenna 302. The PA/LNA 344 outputs the UL signal amplified by the LNA to the mixer 343.

The antenna 302 transmits the DL signal outputted from the PA/LNA 344 to the terminal devices 121, 122, ... by radio. Further, the antenna 302 receives the UL signal transmitted from the terminal devices 121, 122, ... by radio and outputs the received UL signal to the PA/LNA 344.

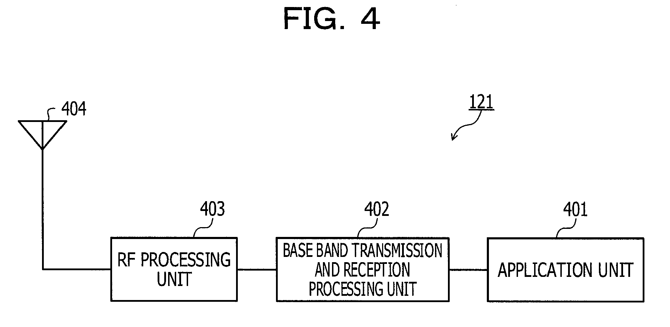

FIG. 4 is a diagram illustrating an example of a terminal device according to the embodiment. Although configuration of the terminal device 121 is described below, the terminal devices 122, ... have the same configuration. As illustrated in FIG. 4, the terminal device 121 according to the embodiment comprises an application unit 401, a base band transmission and reception processing unit 402, a RF processing unit 403 and an antenna 404.

The application unit 401 generates a transmission signal which the terminal device 121 transmits, and outputs to the base band transmission and reception processing unit 402. Further, the application unit 401 performs a processing based on a reception signal outputted from the base band transmission and reception processing unit 402.

The base band transmission and reception processing unit 402 performs base band processing for a transmission signal outputted from the application unit 401, and outputs a DL base band signal obtained by base band processing to the RF processing unit 403. The base band transmission and reception processing unit 402 also performs base band processing for an UL base band signal outputted from the RF processing unit 403, and outputs a reception signal obtained by base band processing to the application unit 401.

Further, the base band transmission and reception processing unit 402 acquires a TPC value from the base station apparatus 110 out of UL control information included in the reception signal obtained by base band processing. Then, the RF processing unit 403 adjusts, in accordance with the acquired TPC value, the CQI transmission power included in the UL signal transmitted to the base station apparatus 110 by the terminal device 121.

The RF processing unit 403 performs RF processing for the DL base band signal outputted from the base band transmission and reception processing unit 402. For example, the RF processing unit 403 performs transmission RF processing for the DL base band signal outputted from the base band transmission and reception processing unit 402, such as conversion from the digital signal to the analog signal and conversion and amplification from the base band frequency to the RF frequency. Then, the RF processing unit 403 outputs the DL signal obtained by the transmission RF processing to the antenna 404.

Further, the reception RF processing unit 403 performs RF processing for the UL signal outputted from the antenna 404. For example, the RF processing unit 403 performs reception RF processing for the UL signal outputted from the antenna 404, such as amplification, conversion from the RF frequency to the base band frequency, and conversion from the analog signal to the digital signal. Then, the RF processing unit 403 outputs the UL base band signal obtained by the reception RF processing to the base band transmission and reception processing unit 402.

The antenna 404 transmits the DL signal outputted from the RF processing unit 403 to the base station apparatus 110 by radio. Further, the antenna 404 receives the UL signal transmitted from the base station apparatus 110 by radio and outputs the received UL signal to the RF processing unit 403.

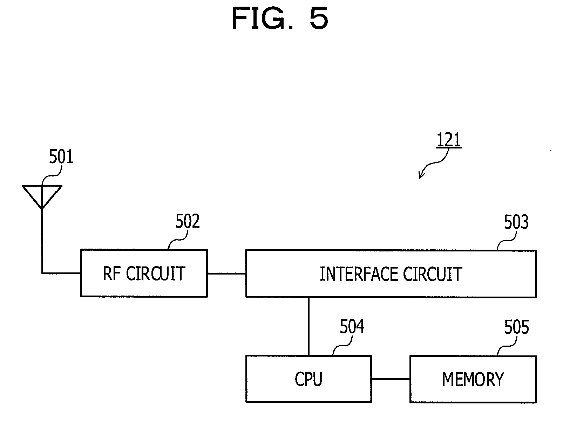

FIG. 5 is a diagram illustrating an example of a hardware configuration of a terminal device according to the embodiment. Although hardware configuration of the terminal device 121 is described below, the terminal devices 122, ... have the same configuration. As illustrated in FIG. 3, the terminal device 121 according to the embodiment comprises an antenna 501, a RF circuit 502, an interface circuit 503, a CPU 504 and a memory 505.

The antenna 501 transmits and receives a radio signal from the base station apparatus 110. The RF circuit 502 includes circuits of devices such as converters and amplifiers performing transmission RF processing and reception RF processing by the RF processing unit 403 illustrated in FIG. 4. The interface circuit 503 is a circuit which implements an interface coupling the RF circuit 502 and the CPU 504 with each other. The CPU 504 performs arithmetic operation by using the memory 505. The memory 505 includes, for example, a main memory and an auxiliary memory. The main memory is, for example, a RAM. The main memory is used as a work area of the CPU 504. The auxiliary memory is a non-volatile memory such as, for example, a magnetic disk and a flush memory. The auxiliary memory stores programs for operating the terminal device 121. Programs stored in the auxiliary memory are loaded into the main memory and executed by the CPU 504.

The antenna 404 illustrated in FIG. 4 may be implemented, for example, by the antenna 501. The RF processing unit 403 illustrated in FIG. 4 may be implemented, for example, by the RF circuit 502. The base band transmission and reception processing unit 402 illustrated in FIG. 4 may be implemented, for example, by the CPU 504 and the memory 505.

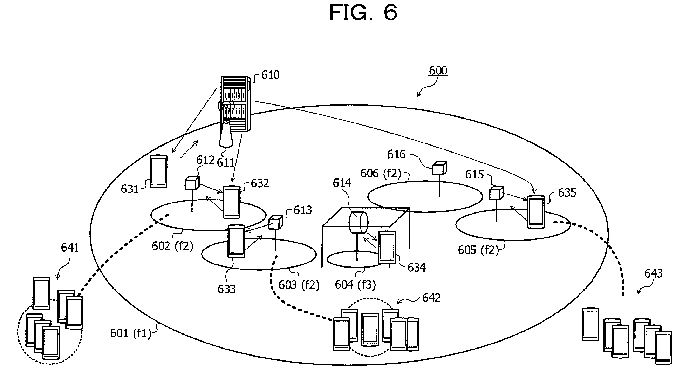

FIG. 6 is a diagram illustrating an example of a radio communication system according to the embodiment. The communication system 100 illustrated in FIG. 1 may be applied, for example, to a radio communication system 600 illustrated in FIG. 6. The radio communication system 600 includes an eNB 610, a femto base station 614, UEs 631 to 636 and UE groups 641 to 643.

The base station apparatus 110 illustrated in FIG. 1 may be applied, by way of an example, to an eNB 610 and a femto base station 614. The terminal devices 121, 122, ... illustrated in FIG. 1 may be applied, by way of an example, to a UE among UEs 631 to 635 and a UE among UE groups 641 to 643.

The eNB 610 is a base station apparatus (evolved node B) comprising the antenna 611 and RRHs 612, 613, 615, 616. For example, the eNB 610 forms a cell 601 of a frequency f1 by the antenna 611. The eNB 610 also forms a cell 602 of a frequency f2 by the RRH 612. The eNB 610 also forms a cell 603 of a frequency f2 by the RRH 613. The eNB 610 also forms a cell 605 of a frequency f2 by the RRH 615. The eNB 610 also forms a cell 606 of a frequency f2 by the RRH 616. The femto base station 614 is a base station apparatus which forms a cell 604 of a frequency f3.

The cell 601 is a macro cell with a wide cell range. Cells 602, 603, 605, 606 are small cells with the cell range smaller than the macro cell. The cell 604 is a femto cell with the cell range smaller than the macro cell. In the example illustrated in FIG. 6, each cell range of cells 602 to 606 is included in the cell range of the cell 601.

UEs 631 to 635 are, for example, terminal devices (UE: User Equipment) which are capable of performing radio communication by cells 601 to 606. In the example illustrated in FIG. 6, the UE 631 stays inside the cell 601 only and performs downlink and uplink radio communication by the cell 601. The UE 632 stays inside cells 601, 602, performs downlink radio communication by carrier aggregation by using both cells 601 and 602, and performs uplink radio communication by the cell 602.

The UE 633 stays inside cells 601, 603 and performs downlink and uplink radio communication by the cell 603. The UE 634 stays inside cells 601, 604 and performs downlink and uplink radio communication by the cell 604. The UE 635 stays inside cells 601, 605, performs downlink radio communication by carrier aggregation by using both cells 601 and 605, and performs uplink radio communication by the cell 605. In the example illustrated in FIG. 6, in addition to UEs 631 to 635, there are, for example, the UE group 641 staying inside the cell 602, the UE group 642 staying inside the cell 603, and the UE group 643 staying inside the cell 605.

For example, UEs 631 to 635 transmit the CQI to the eNB 610 or the femto base station 614 by the PUCCH in the uplink radio communication. The eNB 610 and the femto base station 614 perform the AFC for the PUSCH received from UEs 631 to 635 based on the received CQI.

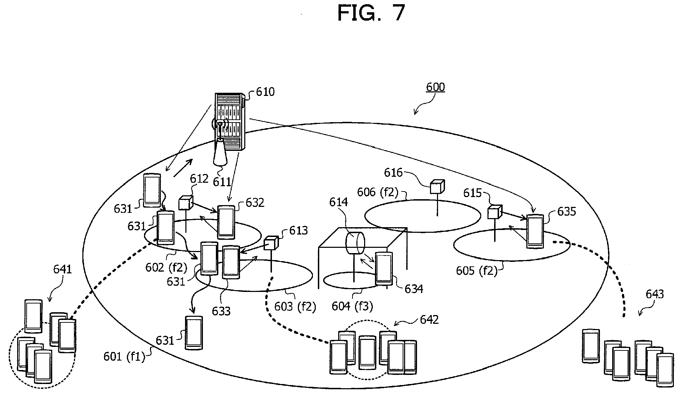

FIG. 7 is a diagram illustrating an example of a UE movement in the radio communication system according to the embodiment. In FIG. 7, description of a section similar to the section illustrated in FIG. 6 is omitted by assigning the same reference numeral. For example, in a case where cells with frequencies same or close to each other are densely formed and there are many UEs like in a radio communication system 600 illustrated in FIG. 6, a moving UE repeats entry and exit from cells in different environments. Entry and exit from cells includes repetition of handover between cells and mere passage through the area of cells.

In the example illustrated in FIG. 7, the UE 631 moves from a position staying inside the cell 601 to a position staying inside cells 601, 602, then moves to a position staying inside cells 601, 603 and then moves to a position staying inside the cell 601 only.

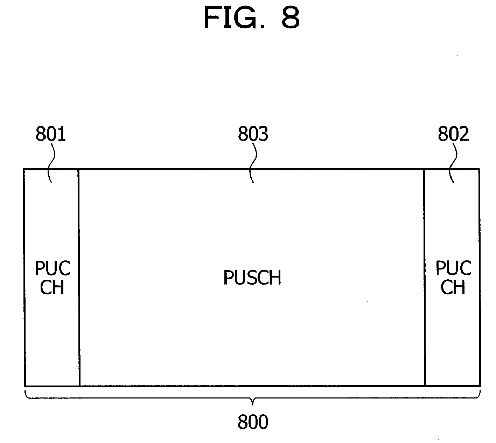

FIG. 8 is a diagram illustrating an example of an uplink bandwidth in the radio communication system according to the embodiment. A bandwidth 800 illustrated in FIG. 8 represents a bandwidth in an uplink of the radio communication system 600. The transverse direction of the bandwidth 800 represents frequency. PUCCHs 801, 802 represent PUCCHs allocated to the bandwidth 800. The PUSCH 803 represents a physical uplink shared channel (PUSCH) allocated to the bandwidth 800. As illustrated in FIG. 8, the bandwidth in the bandwidth 800 to which the PUCCHs 801, 802 are allocated is limited.

In a case where cells with frequencies same or close to each other are densely formed and there are many UEs like in a radio communication system 600 illustrated in FIG. 6, many UEs are multiplexed (for example, code division multiplexed) in limited resources of PUCCHs 801, 802. If many UEs are multiplexed, accurate extraction of PUCCH destined to the station becomes difficult, and thereby reception quality of the PUCCH is apt to deteriorate and accuracy of AFC based on the CQI included in the PUCCH drops.

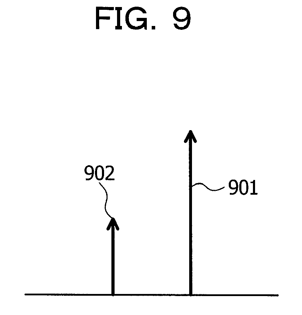

FIG. 9 is a diagram illustrating an example of a PUCCH interference in a radio communication system according to the embodiment. In FIG. 9, the UE signal 901 is a PUCCH signal of the UE 631, and the UL signal 902 is a PUCCH signal of the UE 632. For example, when the UE 631 enters the cell 602 as in the example illustrated in FIG. 7, the UE 631 maintains transmission power then existing in the cell 601 until the UE 631 becomes steady.

Therefore, as illustrated in FIG. 9, when transmission power of the UL signal 901 in the cell 601 is higher than transmission power of the UL signal 902, the UL signal 901 of the UE 631 may become an interference wave against the UL signal 902 (desired wave) of the UE 632. On the other hand, although not illustrated, when transmission power of the UL signal 901 in the cell 601 is lower than transmission power of the UL signal 902, the UL signal 902 of the UE 632 may become an interference wave against the UL signal 901 (desired wave) of the UE 631.

Thus, the resource of the PUCCH is just a few RB in each bandwidth, and when multiple UEs are multiplexed therein, the PUCCH is apt to deteriorate. In such an overcrowded environment, when there is a high inbound and outbound traffic in the cell of the UE, desired wave of a UE may become an interference wave against other UEs and may cause decrease in the AFC accuracy.

Here, decrease in the AFC accuracy due to multiplexing of many CQIs is described. For example, although the eNB 610 performs the AFC using the PUCCH including the CQI, turbo encoding is not used for the PUCCH. In the PUCCH, information for multiplexing multiple UEs is stored in the 1 RB by using orthogonal series and cyclic shift. For example, in the format 1x, information for multiplexing 32 UEs is stored in 1 RB by using the cyclic shift. In the format 2x, information for multiplexing 12 UEs is stored in 1 RB. In the format 3, information for multiplexing 5 UEs is stored in 1 RB by using an orthogonal series.

Information of the PUCCH in that state is processed by the eNB 610, and each UE acquires a signal of the base station thereof. Therefore, if the signal wave of a UE among the multiplexed multiple UEs is strong, it interferes with and affects the PUCCH information of other UEs multiplexed adjacent to the UE since AFC for other UEs is performed based on the PUCCH information subjected to the interference, accuracy of the AFC drops. Larger the number of multiplexed UEs, more accuracy of the AFC is apt to deteriorate since each of UEs is multiplexed close to the RB and thereby there is a high possibility that the hamming distance may become short.

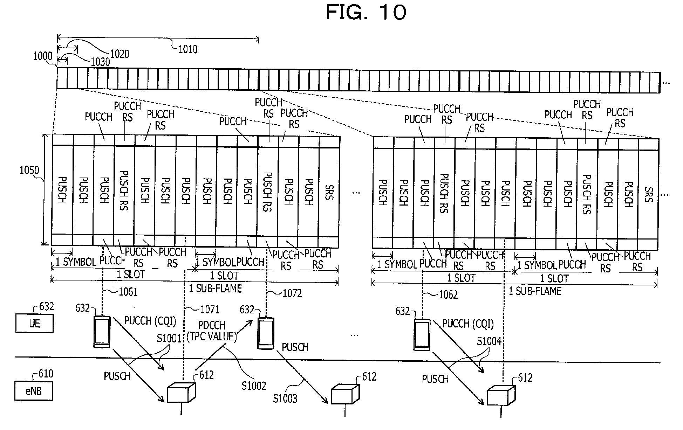

FIG. 10 is a diagram illustrating an example of a processing timing in the radio communication system according to the embodiment. In FIG. 10, adjustment of the CQI transmission power from the UE 632 by the eNB 610 is described by way of an example. A radio resource illustrated in FIG. 10 is a radio resource in the radio communication system 600, and the transverse direction of the radio resource 1000 represents time.

A frame 1010 represents a unit of 1 frame in the radio resource 1000. 1 sub-frame corresponds to 10 [ms]. A sub-frame 1020 represents a unit of 1 sub-frame in the radio resource 1000. 1 sub-frame corresponds to 1 [ms]. A slot 1030 represents a unit of 1 slot in the radio resource 1000. 1 slot corresponds to 0.5 [ms]. A resource block 1050 is a frequency resource (systems BW, RB) in the radio resource 1000.

In the example illustrated in FIG. 10, assume that the eNB 610 sets CQI transmission timings 1061, 1062, ... of a third symbol in each of frames 1010 as a periodical transmission timing of the CQI by the UE 632.

First, the UE 623 transmits, to the eNB 610, a PUCCH including the CQI and a PUSCH including uplink user data from the UE 632 to the eNB 610 in the CQI transmission timing 1061 (step S1001). For example, the UE 632 measures downlink reception quality based on a radio signal from the eNB 610 to the UE 632, generates a CQI which is an indicator of the measured reception quality, and transmits a PUCCH including the generated CQI in step S1001.

In response to this, the eNB 610 performs the AFC based on the CQI included in the PUCCH received in step S1001. That is, the eNB 610 estimates a frequency deviation in the CQI included in the received PUCCH, and compensates for, based on the estimated frequency deviation, a frequency deviation in the PUSCH received in step S1001.

Further, the eNB 610 calculates, as the throughput, reception quality based on the decoding result of the PUSCH for which the frequency deviation is compensated for by the AFC. As the reception quality, for example, the bit error rate (BER) and the block error ratio (BLER) may be used. Then, the eNB 610 determines based on the calculated throughput whether to increase, decrease or maintain the CQI transmission power from the UE 632, and generates the TPC value based on the determination result.

Next, the eNB 610 transmits a physical downlink control channel (PDCCH) including the generated TPC value to the UE 632 (step S1002). For example, the eNB 610 performs step S1002 in a timing 1071 when the PDCCH is allocated to the UE 632.

Next, the UE 623 transmits, to the eNB 610, a PUSCH including uplink user data from the UE 632 to the eNB 610 (step S1003). In this case, a timing 1072 of step S1003 is not a periodical transmission timing of the CQI by the UE 632 set by the eNB 610. Therefore, the UE 632 does not transmit the PUCCH including the CQI in step S1003.

In response to this, the eNB 610 compensates for a frequency deviation in the PUSCH received in step S1003 by the AFC. At that time, the eNB 610 uses the frequency deviation estimated based on the CQI included in the PUCCH received in step S1001, in the AFC for the PUSCH received in step S1003. Thus, the UE 632 intermittently transmits the CQI to the eNB 610 in accordance with the setting by the eNB 610. In response to this, the eNB 610 continuously uses a value (estimated value of frequency deviation) of the AFC calculated from the received CQI in the AFC until receiving a next CQI.

Next, assume that a next timing is a transmission timing next to a transmission timing in step S1001 among CQI transmission timings by the UE 632 set by the eNB 610, that is, the CQI transmission timing 1062. In this case, the UE 623 transmits, to the eNB 610, a PUCCH including the CQI and a PUSCH including uplink user data from the UE 632 to the eNB 610 (step S1004). The UE 632 adjusts the CQI transmission power included in the PUCCH transmitted in step S1004 based on a TPC value included in the PDCCH received in step S1002.

In response to this, the eNB 610 performs the AFC based on the CQI included in the PUCCH received in step S1004. That is, the eNB 610 estimates a frequency deviation in the CQI included in the received PUCCH, and compensates for, based on the estimated frequency deviation, a frequency deviation in the PUSCH received in step S1004.

Further, the eNB 610 calculates, as the throughput, reception quality based on the decoding result of the PUSCH whose frequency deviation is compensated for by the AFC. Then, the eNB 610 detects a change of the throughput due to adjustment of the CQI transmission power from the UE 632 based on the calculated throughput.

Then, when the throughput has deteriorated due to adjustment of the CQI transmission power or when there are no changes in the throughput despite increase of the CQI transmission power, the eNB 610 restores the CQI transmission power from to the UE 632 to a pre-adjustment transmission power. Even when restoring the CQI transmission power from the UE 632 to the pre-adjustment transmission power, the eNB 610 may use the TPC value included in the PDCCH transmitted to the UE 632 in the same manner as step S1001.

When the throughput is improved by adjustment of the CQI transmission power or when the throughput has not deteriorated despite decrease of the CQI transmission power, the eNB 610 does not restore the CQI transmission power from the UE 632 to the pre-adjustment transmission power. Then, in the same manner as step S1002, the eNB 610 generates the TPC value based on the calculated throughput and transmits the PDCCH including the generated TPC to the UE 632.

Thus, upon adjusting the CQI transmission power from the UE 632, the eNB 610 checks adjustment effects of the CQI transmission power by detecting a change of the throughput by adjustment of the CQI transmission power from the UE 632. Then, when the throughput has deteriorated due to adjustment of the CQI transmission power or when there are no changes in the throughput despite increase of the CQI transmission power, the eNB 610 restores the CQI transmission power from to the UE 632 to the pre-adjustment transmission power. Thus, for example, when the throughput has deteriorated due to a factor different from deterioration of the reception quality of the CQI, the CQI transmission power may be restored to the pre-adjustment transmission power.

Next, adjustment of the CQI transmission power in the PUCCH is described. In the transmission of the PUCCH, a different format (pucch format 1, pucch format 1a, ..., etc.) is used according to the information transmitted by the PUCCH. The format of the PUCCH is specified, for example, in TS36.213 of the 3rd Generation Partnership Project (3GPP).

The UE may adjust transmission power of the CQI only in the PUCCH by adjusting transmission power of the PUCCH only of the format in which the CQI is transmitted. Also, when the CQI is transmitted, for example, in the format 2x which is a format of the PUCCH, the UE may adjust transmission power of the CQI only in the PUCCH by adjusting the bit number of the CQI.

However, adjustment of the CQI transmission power is not limited to adjustment of the CQI only in the PUCCH, but may be adjustment of transmission power (for example, entire transmission power of the PUCCH) including data different from the CQI in the PUCCH as well.

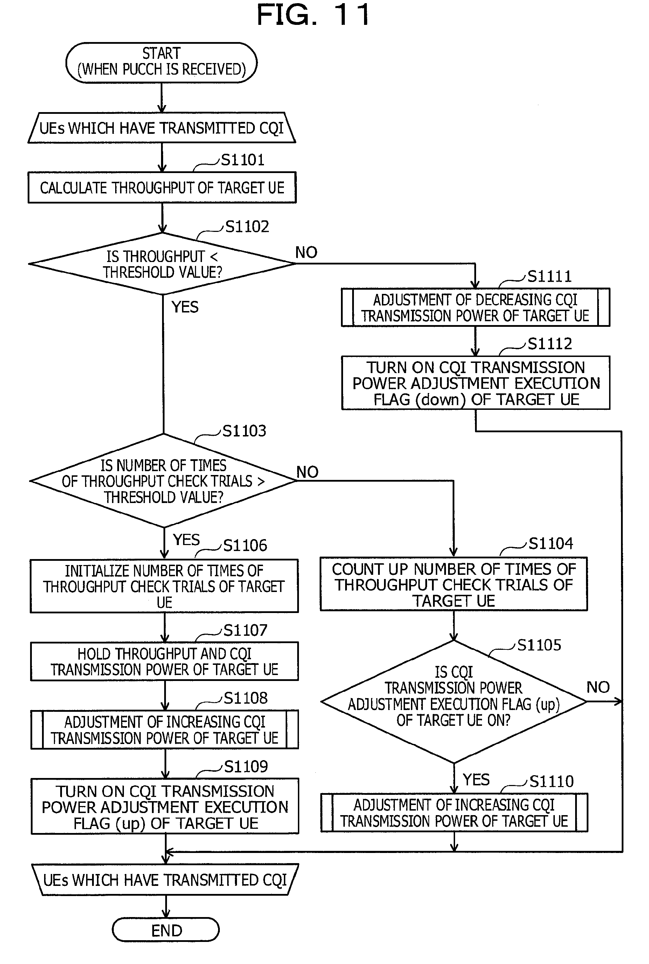

FIG. 11 is a flowchart illustrating an example of a power adjustment processing by the eNB according to the embodiment. Every time receiving the PUCCH (upon receipt of the PUCCH), the eNB 610 according to the embodiment performs a processing illustrated in FIG. 11 for UEs which have transmitted the CQI by the received PUCCH, as target UEs. Further, the eNB 610 performs the processing illustrated in FIG. 11 for each of cells formed by the base station.

First, the eNB 610 calculates the throughput of a target UE (step S1101). In step S1101, for example, the eNB 610 performs the AFC compensating for a frequency deviation of the PUSCH received from the target UE by then based on the CQI which the target UE has transmitted by the received PUCCH. Then, the eNB 610 calculates, as the throughput, reception quality based on the decoding result of the PUSCH for which the frequency deviation is compensated for.

Next, the eNB 610 determines whether the throughput calculated in step S1101 is lower than a predetermined threshold value (step S1102). Thus, it may be indirectly determined whether reception quality of the CQI included in the PUCCH from the target UE has deteriorated. When the throughput is lower than the threshold value (step S1102: Yes), the eNB 610 determines whether the number of times of throughput check trials of the target UE is larger than a predetermined threshold value (step S1103). The number of times of throughput check trials of the target UE is the number of times of check trials of throughput of the target UE, and the default value thereof is 0.

In step S1103, when the number of times of throughput check trials is not larger than the threshold value (step S1103: No), the eNB 610 counts up (+1) the number of times of throughput check trials of the target UE (step S1104).

Next, the eNB 610 determines whether the CQI transmission power adjustment execution flag (up) of the target UE is ON (step S1105). The CQI transmission power adjustment execution flag (up) is information indicating whether adjustment of the CQI transmission power for the target UE is being executed. In the initialized state, the CQI transmission power adjustment execution flag is set to OFF. When the CQI transmission power adjustment execution flag (up) is not ON (step S1105: No), the eNB 610 ends a series of processings for the target UE.

In step S1103, when the number of times of throughput check trials is larger than a threshold value (step S1103: Yes), the eNB 610 initializes the number of times of throughput check trials of the target UE (step S1106). That is, the eNB 610 resets the number of times of throughput check trials of the target UE to 0.

Next, the eNB 610 holds the throughput of the target UE calculated in step S1101 and a current CQI transmission power (pre-adjustment CQI transmission power) of the target UE into the memory (step S1107). The memory holding the throughput and the CQI transmission power of the target UE may be, for example, a memory 322 illustrated in FIG. 3.

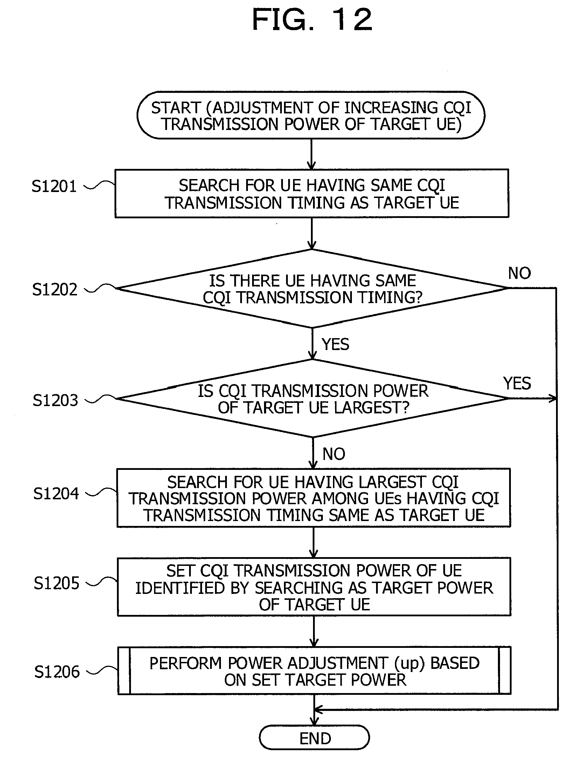

Next, the eNB 610 performs adjustment of increasing the CQI transmission power of the target UE (step S1108). The processing of adjustment of increasing the CQI transmission power of the target UE in step S1108 is described later (for example, see FIG. 12). Next, the eNB 610 turns ON the CQI transmission power adjustment execution flag (up) of the target UE (step S1109) and ends a series of processings for the target UE.

In step S1105, when the CQI transmission power adjustment execution flag (up) is ON (step S1105: Yes), the eNB 610 performs adjustment of increasing the CQI transmission power of the target UE (step S1110) and ends a series of processings for the target UE. The processing of adjustment of increasing the CQI transmission power of the target UE in step S1110 is the same as step S1108 and described later (for example, see FIG. 12).

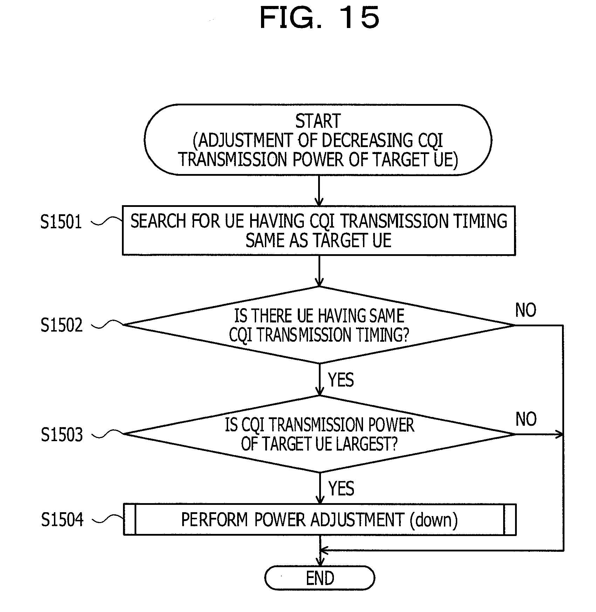

In step S1102, when the throughput is not lower than the threshold value (step S1102: No), the eNB 610 performs adjustment of decreasing the CQI transmission power of the target UE (step S1111). The processing of adjustment of decreasing the CQI transmission power of the target UE in step S1111 is described later (for example, see FIG. 15). Next, the eNB 610 turns ON the CQI transmission power adjustment execution flag (down) of the target UE (step S1112) and ends a series of processings for the target UE.

The number of times of throughput check trials used in step S1103 may be set, for example, according to the number of UEs (multiplex number of PUCCH) which have transmitted the CQI by the received PUCCH. For example, the number of times of throughput check trials is set smaller as the multiplex number of the PUCCH is larger. This is because that as the multiplex number of the PUCCH is larger, decrease in the throughput of the PUSCH may cause decrease in the AFC accuracy with high possibility.

That is, in case that the multiplex number of the PUCCH is large, decrease in the throughput may be improved at an early stage by adjusting so as to increase the CQI transmission power at an early stage. In a case that the multiplex number of the PUCCH is small, even when throughput drops, control may be stabilized by delaying the adjustment of increasing the CQI transmission power. Thus, throughput may be improved efficiently by setting a smaller number of times of throughput check trials with respect to a larger multiplex number of the PUCCH.

FIG. 12 is a flowchart illustrating an example of a processing of adjustment of increasing the CQI transmission power of the target UE by the eNB according to the embodiment. In steps S1108 and S1110 illustrated in FIG. 11, the eNB 610 performs, for example, a processing illustrated in FIG. 12 as a processing of adjustment of increasing the CQI transmission power of the target UE.

First, the eNB 610 searches for a UE having a CQI transmission timing same as the target UE out of UEs coupled to the cell thereof (step S1201). Next, the eNB 610 determines based on the search result in step S1201 whether there is a UE having a CQI transmission timing same as the target UE (step S1202).

In step S1202, when determined that there is a UE having a CQI transmission timing same as the target UE (step S1202: Yes), the eNB 610 shifts to step S1203. That is, the eNB 610 determines whether the CQI transmission power of the target UE is largest among UEs which transmit the CQI in the CQI transmission timing of the target UE (step S1203). When the CQI transmission power of the target UE is largest (step S1203: Yes), it may be determined that there is a high possibility that the throughput of the target UE is not improved even when the CQI transmission power of the target UE is increased. In this case, the eNB 610 ends a series of adjustment processings.

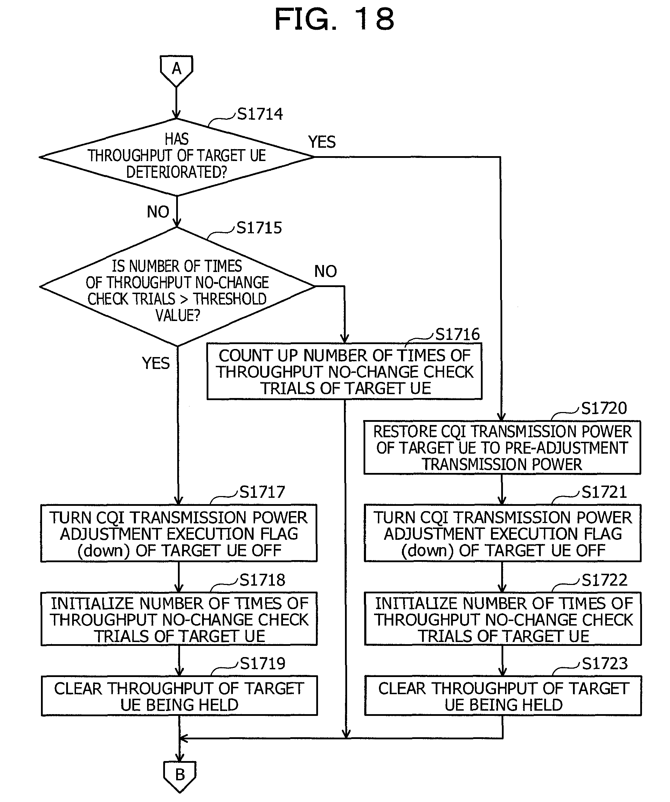

In step S1203, when the CQI transmission power of the target UE is not largest (step S1203: No), the eNB 610 shifts to step S1204. That is, the eNB 610 searches for a UE having a largest CQI transmission power among UEs which transmit the CQI in the CQI transmission timing of the target UE (step S1204). For example, the eNB 610 stores the CQI transmission power for each of UEs (for example, see FIG. 18) and may perform searching of step S1204 based on the CQI transmission power for each of UEs.

Next, the eNB 610 sets the CQI transmission power of a UE having a largest transmission power identified by searching in step S1204 as a target power of the target UE (step S1205). That is, in the CQI transmission timing of the target UE, the UE identified by the searching is considered a largest interference source. Thus, interference with the target UE may be canceled by matching the CQI transmission timing of the target UE with the largest interference source.

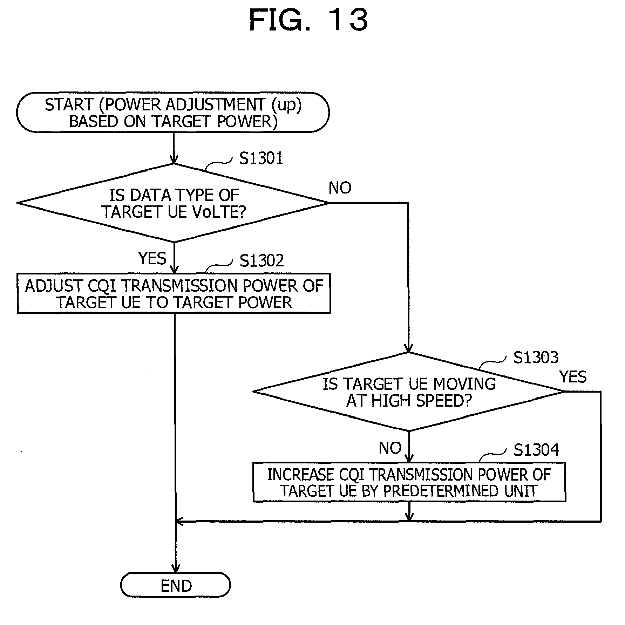

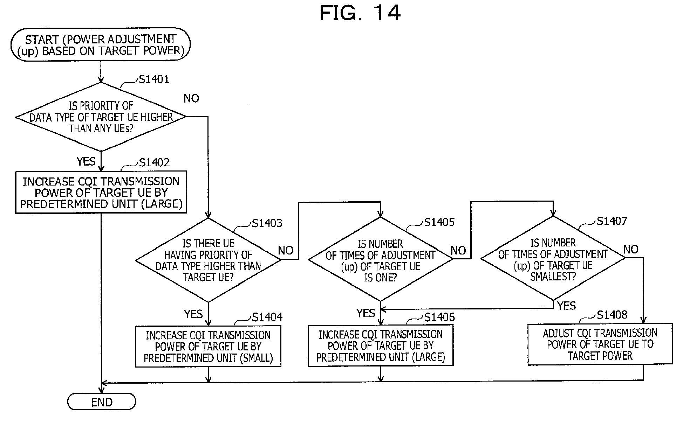

Next, the eNB 610 performs power adjustment (up) based on the target power set in step S1205 (step S1206) and ends a series of adjustment processings. Processing of power adjustment (up) based on the target power in step S1206 is described later (for example, see FIGs. 13 and 14).

In step S1202, when the eNB 610 determines that there are no UEs having the same CQI transmission timing (step S1202: No), only the target UE transmits the CQI in the CQI transmission timing of the target UE. That is, it may be determined that there is no deterioration of the CQI due to transmission of the CQI by multiple UEs. In this case, the eNB 610 does not perform adjustment of increasing the CQI transmission power of the target UE and ends a series of adjustment processings.

Thus, when throughput (reception quality) of the PUSCH (data signal) from the target UE subjected to the AFC is lower than a threshold value (predetermined reception quality), the eNB 610 identifies a UE having a largest CQI transmission power among other UEs having the same transmission timing as the target UE. Then, the eNB 610 performs adjustment of increasing the CQI transmission power of the target UE based on the transmission power of the identified UE. Thus, the CQI transmission power of the target UE may be adjusted so as to match with the CQI transmission power of a UE which may be a largest interference source in the CQI transmission timing of the target UE with high possibility, and thereby interference with the CQI by the target UE may be reduced.

When there are no UEs having the same transmission timing as the target UE and having a CQI transmission power higher than the target UE, the eNB 610 does not perform adjustment of increasing the transmission power of the target UE. Thus, although there is a low possibility of improving throughput of the target UE even by performing adjustment of increasing the transmission power of the target UE, growing interference with the CQI of other UEs may be suppressed by increasing the CQI transmission power of the target UE.

FIG. 13 is a flowchart illustrating an example of a processing of power adjustment (up) based on the target power by the eNB according to the embodiment. In step S1206 illustrated in FIG. 12, the eNB 610 performs, for example, a processing illustrated in FIG. 13 as a processing of power adjustment (up) based on the target power. First, the eNB 610 determines whether data type of the target UE is voice over LTE (VoLTE) (step S1301).

In step S1301, in a case that the data type is VoLTE (step S1301: Yes), it may be determined that priority is preferably given to improvement of the AFC accuracy in the target UE. In this case, the eNB 610 adjusts the CQI transmission power of the target UE so as to be the target power set in step S1205 (step S1302) and ends a series of power adjustment processings. Thus, the AFC accuracy in the target UE may be improved by increasing the CQI transmission power of the target UE in a short time.

In step S1301, when the date type is not VoLTE (step S1301: No), the eNB 610 determines whether the target UE is moving at a high speed (step S1303). The determination in step S1303 may be made, by way of an example, based on fading fluctuation for the target UE estimated by the eNB 610. However, the determination in step S1303 is not limited to such a method, and may be made, for example, from detection result of the moving state of the target UE which the eNB 610 receives from the target UE.

In step S1303, in a case that the UE is moving at a high speed (step S1303: Yes), the eNB 610 determines that the target UE may be outside the cell of the eNB 610 in a short time. Thus, the eNB 610 does not perform adjustment of increasing the CQI transmission power of the target UE and ends a series of power adjustment processings.

In step S1303, in a case that the UE is not moving at a high speed (step S1303: No), the eNB 610 shifts to step S1304. That is, the eNB 610 increases the CQI transmission power of the target UE by a predetermined unit with the target power set in step S1205 illustrated in FIG. 12 as an upper limit (step S1304) and ends a series of power adjustment processings. Thus, the eNB 610 performs ramping of gradually increasing the CQI transmission power of the target UE. Thus, speed of adjusting the CQI transmission power of the target UE may be reduced and thereby the CQI transmission power of the target UE may not become much larger than other UEs.

Thus, the eNB 610 sets the power adjustment method, for example, according to the state (data type or moving state) of the target UE. Adjustment of the transmission power in steps S1302 and S1304 may be performed, for example, by using uplink (UL) control information such as the TPC value transmitted to the target UE.

That is, in the adjustment of the CQI transmission power of the target UE, the eNB 610 sets adjustment speed of the CQI transmission power of the target UE based on the type of data signal transmitted from the target UE to the eNB 610. Thus, transmission power may be increased for the CQI used in the AFC of the data signal having high priority, and thereby throughput of the data signal having high priority may be improved preferentially. Further, transmission power may be reduced for the CQI used in the AFC of the data signal of the type having low priority, and thereby interference with the CQI of other UEs may be reduced.

When the target UE is moving at a speed equal to or higher than a predetermined speed (moving at high speed), the eNB 610 does not perform adjustment of increasing the CQI transmission power of the target UE even if throughput for the target UE is lower than the threshold value (predetermined reception quality). Thus, adjustment of the CQI transmission power for the target UE which may be outside the cell's region in a short time with high possibility may be suppressed, and thereby control of the CQI transmission power of each UE may be stabilized.

FIG. 14 is a flowchart illustrating an example of a processing of power adjustment (up) based on the target power by the eNB according to the embodiment. In step S1206 illustrated in FIG. 12, the eNB 610 may perform, for example, a processing illustrated in FIG. 14 as a processing of power adjustment (up) based on the target power. First, the eNB 610 determines whether priority of the data type of the target UE is higher than any UEs having the same transmission timing as the target UE (step S1401). A UE having the same CQI transmission timing as the target UE is, for example, a UE identified by searching in step S1201 illustrated in FIG. 12.

In step S1401, when priority of the data type of the target UE is higher than any other UEs (step S1401: Yes), the eNB 610 shifts to step S1402. That is, the eNB 610 increases the CQI transmission power of the target UE by a predetermined unit (large) with the target power set in step S1205 illustrated in FIG. 12 as an upper limit (step S1402) and ends a series of power adjustment processings. The predetermined unit for increasing the transmission power in step S1402 is, for example, a larger unit than in step S1404. Thus, adjustment speed of the CQI transmission power of the target UE becomes faster relatively.

In step S1401, when priority of the data type of the target UE is lower than or same as any other UEs (step S1401: No), the eNB 610 shifts to step S1403. That is, the eNB 610 determines whether there is a UE having a priority of the data type higher than the target UE among UEs having the same transmission timing as the target UE (step S1403).

In step S1403, when determined that there is a UE having a priority of the data type higher than the target UE (step S1403: Yes), the eNB 610 shifts to step S1404. That is, the eNB 610 increases the CQI transmission power of the target UE by a predetermined unit (small) with the target power as an upper limit (step S1404) and ends a series of power adjustment processings. The predetermined unit for increasing the transmission power in step S1404 is, for example, a smaller unit than in steps S1402 and S1406. Thus, adjustment speed of the CQI transmission power of the target UE becomes slower relatively.

In step S1403, when determined that there are no UEs having a priority of the data type higher than the target UE (step S1403: No), the eNB 610 determines whether the number of times of adjustment (up) of the target UE is one (step S1405). The number of times of adjustment (up) is the number of upward adjustment executions of the CQI transmission power of the target UE. For example, default value of the number of times of adjustment (up) is "0", which is counted up every time the eNB 610 shifts to step S1206 illustrated in FIG. 12.

In step S1405, when the number of times of adjustment (up) is one (step S1405: Yes), the eNB 610 shifts to step S1406. That is, the eNB 610 increases the CQI transmission power of the target UE by a predetermined unit (large) with the target power as an upper limit (step S1406) and ends a series of power adjustment processings. The predetermined unit for increasing the transmission power in step S1406 is, for example, a larger unit than in step S1404. Thus, adjustment speed of the CQI transmission power of the target UE becomes faster relatively.

In step S1405, when the number of times of adjustment (up) is not one (step S1405: No), the eNB 610 shifts to step S1407. That is, the eNB 610 determines whether the number of times of adjustment (up) of the target UE is smallest among UEs which transmit the CQI in the CQI transmission timing of the target UE (step S1407).

In step S1407, when the number of times of adjustment (up) of the target UE is smallest (step S1407: Yes), the eNB 610 shifts to step S1406. When the number of times of adjustment (up) of the target UE is not smallest (step S1407: No), the eNB 610 shifts to step S1408. That is, the eNB 610 adjusts the CQI transmission power of the target UE so as to be the target power set in step S1205 (step S1408) and ends a series of power adjustment processings.

The processing of power adjustment (up) based on the target power in step S1206 illustrated in FIG. 12 is not limited to processings illustrated in FIG. 13 and FIG. 14, and various modifications may be possible. For example, in step S1403 illustrated in FIG. 14, when determined that there are no UEs having priority of the data type higher than the target UE, the eNB 610 may not perform adjustment of increasing the CQI transmission power of the target UE and end a series of power adjustment processings. Further, the priority is not limited to the priority of the data type, but may be various priorities such as, for example, a user contract plan of the target UE.

Here, an example of the data type and priority is described. For example, as the No. 1 rank data type having highest priority, there is an emergency call and medical information. As a rank No. 2 data type following the rank No. 1, there is, for example, a voice call by VoLTE.

As a rank No. 3 data type following the rank No. 2, there is, for example, a web data (web information) and application data (Appli) by the web browser. As a rank No. 4 data type following the rank No. 3, there is, for example, sensing data from a sensor node from a sensor network.

Thus, the eNB 610 sets adjustment speed of the CQI transmission power of the target UE based on the type of the data signal from the target UE to the eNB 610 and the type of the data signal from the target UE to a different UE. Thus, transmission power may be increased for the CQI used in the AFC of the data signal having the priority higher than other UEs, and thereby throughput of the data signal having higher priority may be improved preferentially. Also, transmission power may be reduced for the CQI used in the AFC of the data signal of a type having the priority lower than other UEs, and thereby interference with the CQI of other UEs may be reduced.

The eNB 610 sets adjustment speed of the CQI transmission power of the target UE based on number of times of adjustment of the CQI transmission power for the target UE. Thus, CQI transmission power is adjusted preferentially, for example, for a UE having a less number of times of adjustment of the CQI transmission power and having a high possibility of throughput improvement by increase of the CQI transmission power, and thereby throughput within the cell of the eNB 610 may be improved efficiently.

The eNB 610 sets adjustment speed of the CQI transmission power of the target UE based on the number of times of adjustment of the CQI transmission power for the target UE and the number of times of adjustment of the CQI transmission power for a terminal device different from the target UE. Thus, the CQI transmission power is adjusted preferentially, for example, for a UE having a less number of times of adjustment of the CQI transmission power and having a high possibility of throughput improvement by increase of the CQI transmission power, and thereby throughput within the cell of the eNB 610 may be improved efficiently.

FIG. 15 is a flowchart illustrating an example of a processing of adjustment of decreasing the CQI transmission power of the target UE by the eNB according to the embodiment. In step S1111 illustrated in FIG. 11, the eNB 610 performs, for example, a processing illustrated in FIG. 15 as the processing of adjustment of decreasing the CQI transmission power of the target UE.

Steps S1501 and S1502 illustrated in FIG. 15 are similar with steps S1201 and S1202 illustrated in FIG. 12. In step S1502, when determined that there is a UE having a CQI transmission timing same as the target UE (step S1502: Yes), the eNB 610 shifts to step S1503. That is, the eNB 610 determines whether the CQI transmission power of the target UE is largest among UEs which transmit the CQI in the CQI transmission timing of the target UE (step S1503).

In step S1503, when CQI transmission power of the target UE is not largest (step S1503: No), it may be determined that the target UE is not a large interference source in the CQI transmission timing of the target UE. In this case, the eNB 610 does not reduce the CQI transmission power of the target UE and ends a series of adjustment processings.

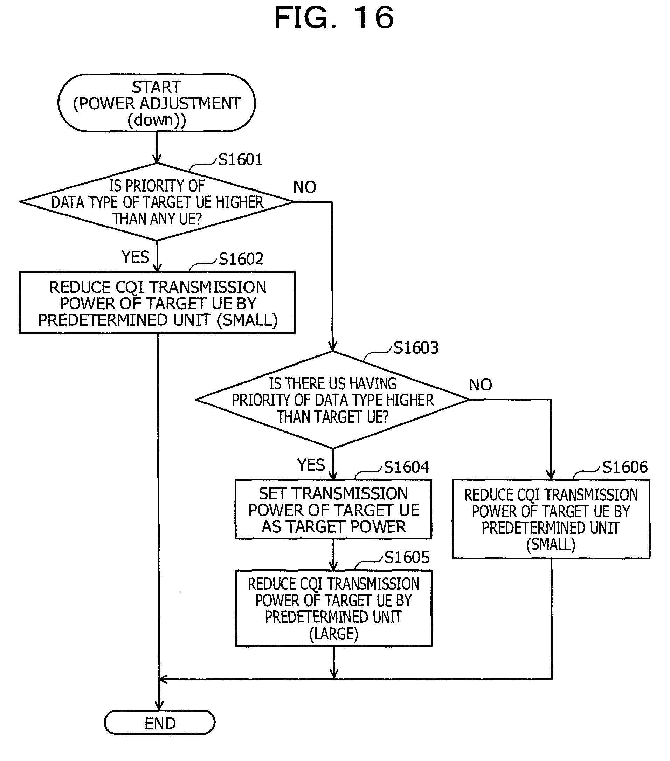

In step S1503, when the CQI transmission power of the target UE is largest (step S1503: Yes), it may be determined that the target UE may be a large interference source in the CQI transmission timing of the target UE. In this case, the eNB 610 performs a predetermined power adjustment (down) (step S1504) and ends a series of adjustment processings. Power adjustment (down) processing in step S1504 is described later (for example, see FIG. 16).

Thus, when throughput (reception quality) of the PUSCH (data signal) from the target UE subjected to the AFC is equal to or higher than a threshold value (predetermined reception quality) and the CQI transmission power of the target UE is largest, the eNB 610 performs adjustment of decreasing the CQI transmission power of the target UE. Thus, when there is a high possibility that the target UE is a largest interference source in the CQI transmission timing of the target UE, interference with other UEs by the CQI of the target UE may be reduced by reducing the CQI transmission power of the target UE.

FIG. 16 is a flowchart illustrating an example of a power adjustment (down) processing by the eNB according to the embodiment. In step S1504 illustrated in FIG. 15, the eNB 610 performs, for example, a processing illustrated in FIG. 16 as a power adjustment (down) processing. First, the eNB 610 determines whether priority of the data type of the target UE is higher than any UEs having the same CQI transmission timing as the target UE (step S1601).

In step S1601, when priority of the data type of the target UE is higher than any other UEs (step S1601: Yes), the eNB 610 shifts to step S1602. That is, the eNB 610 reduces the CQI transmission power of the target UE by a predetermined unit (small) (step S1602) and ends a series of power adjustment processings. The predetermined unit for reducing the transmission power in step S1602 is, for example, a smaller unit than in step S1605.

In step S1601, when priority of the data type of the target UE is lower than or same as any other UEs (step S1601: No), the eNB 610 shifts to step S1603. That is, the eNB 610 determines whether there is a UE having a priority of the data type higher than the target UE among UEs having the same CQI transmission timing as the target UE (step S1603).

In step S1603, when determined that there is a UE having priority of the data type higher than the target UE (step S1603: Yes), the eNB 610 shifts to step S1604. That is, the eNB 610 sets the CQI transmission power of a UE (concerned UE) having priority of the data type higher than the target UE as a target power of the CQI transmission power of the target UE (step S1604).

Next, the eNB 610 reduces CQI transmission power of the target UE by a predetermined unit (large) with the target power set in step S1604 as an upper limit (step S1605) and ends a series of power adjustment processings. The predetermined unit for reducing the transmission power in step S1605 is, for example, a unit larger than in steps S1602 and S1606.

In step S1603, when determined that there are no UEs having priority of the data type higher than the target UE (step S1603: No), the eNB 610 shifts to step S1606. That is, the eNB 610 reduces the CQI transmission power of the target UE by a predetermined unit (small) (step S1606) and ends a series of power adjustment processings. The predetermined unit for reducing the transmission power in step S1606 is, for example, a smaller unit than in step S1605.

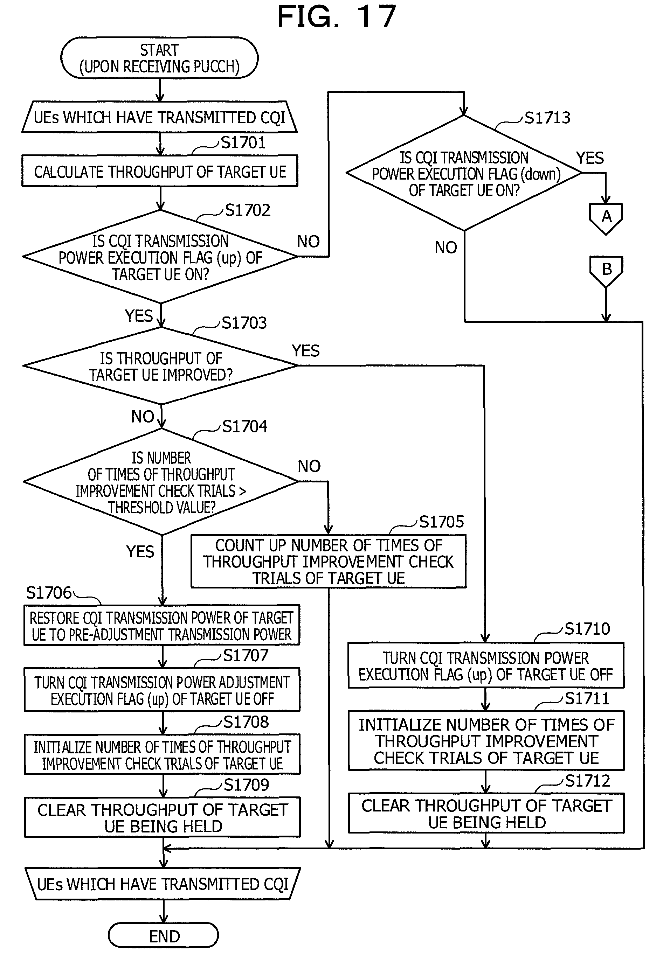

FIGs. 17 and 18 are flowcharts illustrating an example of a power adjustment check processing by the eNB according to the embodiment. Every time receiving the PUCCH (upon receiving the PUCCH), the eNB 610 may perform processings illustrated in FIG. 17 and FIG. 18 along with the processing illustrated in FIG. 11 for each of UEs which has transmitted the CQI in the received PUCCH, as the target UE. For example, every time receiving the PUCCH, the eNB 610 performs processings illustrated in FIGs. 17 and 18 for each of UEs and then performs the processing illustrated in FIG. 11 for each of UEs. The eNB 610 performs processings illustrated in FIGs. 17 and 18 for each of cells formed by the base station.

First, the eNB 610 calculates throughput of the target UE (step S1701). The throughput calculation processing in step S1701 is the same as the throughput calculation processing in step S1101 illustrated in FIG. 11. Next, the eNB 610 determines whether the CQI transmission power adjustment execution flag (up) of the target UE is ON (step S1702). The CQI transmission power adjustment execution flag (up) is set ON, for example, in step S1109 illustrated in FIG. 11.

In step S1702, when the CQI transmission power adjustment execution flag (up) is ON (step S1702: Yes), the eNB 610 determines whether throughput of the target UE is improved (step S1703). The determination in step S1703 may be made by comparing pre-adjustment throughput of the target UE held in step S1107 illustrated in FIG. 11 and current throughput of the target UE calculated in step S1702 with each other. The eNB 610 also may determine in step S1703 whether throughput of the target UE is improved by a specific amount or more.

In step S1703, when the throughput is not improved (step S1703: No), the eNB 610 determines whether the number of times of throughput improvement check trials of the target UE is larger than a predetermined threshold value (step S1704). The number of times of throughput improvement check trials of the target UE is the number of times of check trials of throughput improvement of the target UE, and the default value thereof is 0. When the number of times of throughput improvement check trials is not larger than the threshold value (step S1704: No), the eNB 610 shifts to step S1705. That is, the eNB 610 counts up (+1) the number of times of throughput improvement check trials of the target UE (step S1705), and ends a series to power adjustment processings.

In step S1704, when the number of times of throughput improvement check trials is larger than the threshold value (step S1704: Yes), the eNB 610 restores the CQI transmission power of the target UE to the pre-adjustment CQI transmission power of the target UE (step S1706). The pre-adjustment CQI transmission power of the target UE is, for example, the CQI transmission power of the target UE held in step S1107 illustrated in FIG. 11.

Next, the eNB 610 turns OFF the CQI transmission power adjustment execution flag (up) of the target UE (step S1707). Further, the eNB 610 initializes the number of times of throughput improvement check trials of the target UE (step S1708). That is, the eNB 610 resets the number of times of throughput improvement check trials of the target UE to 0. Further, the eNB 610 clears throughput of the target UE held in step S1107 illustrated in FIG. 11 (step S1709) and ends a series of processings for the target UE.

In step S1703, when the throughput is improved (step S1703: Yes), the eNB 610 turns OFF the CQI transmission power adjustment execution flag (up) of the target UE (step S1710). Further, the eNB 610 initializes the number of times of throughput improvement check trials of the target UE (step S1711). That is, the eNB 610 resets the number of times of throughput improvement check trials of the target UE to 0. Further, the eNB 610 clears throughput of the target UE held in step S1107 illustrated in FIG. 11 (step S1712) and ends a series of processings for the target UE.

In step S1702, when the CQI transmission power adjustment execution flag (up) is not ON (step S1702: No), the eNB 610 determines whether the CQI transmission power adjustment execution flag (down) of the target UE is ON (step S1713). The CQI transmission power adjustment execution flag (down) is set ON, for example, in step S1112 illustrated in FIG. 11.

In step S1713, when the CQI transmission power adjustment execution flag (down) is not ON (step S1713: No), the eNB 610 ends a series of processings for the target UE. When the CQI transmission power adjustment execution flag (down) is ON (step S1713: Yes), the eNB 610 determines whether throughput of the target US has deteriorated (step S1714). The determination in step S1714 may be made by comparing pre-adjustment throughput of the target UE held in step S1107 illustrated in FIG. 11 and current throughput of the target UE calculated in step S1702 with each other. Further, the eNB 610 may determine in step S1714 whether throughput of the target UE has deteriorated by a specific amount or more.

In step S1714, when the throughput has not deteriorated (step S1714: No), the eNB 610 determines whether the number of times of throughput no-change check trials of the target UE is larger than a predetermined threshold value (step S1715). The number of times of throughput no-change check trials is information indicating that the number of times of checking whether throughput has not deteriorated due to adjustment of decreasing the CQI transmission power of the target UE.

In step S1715, when the number of times of throughput no-change check trials is not larger than the threshold value (step S1715: No), the eNB 610 shifts to step S1716. That is, the eNB 610 counts up (+1) the number of times of throughput no-change check trials of the target UE (step S1716), and ends a series of power adjustment processings for the target UE.

In step S1715, when the number of times of throughput no-change check trials is larger than the threshold value (step S1715: Yes), the eNB 610 turns OFF the CQI transmission power adjustment execution flag (down) of the target UE (step S1717). Further, the eNB 610 initializes the number of times of throughput no-change check trials of the target UE (step S1718). That is, the eNB 610 resets the number of times of throughput no-change check trials of the target UE to 0. Further, the eNB 610 clears throughput of the target UE held in step S1107 illustrated in FIG. 11 (step S1719) and ends a series of processings for the target UE.

In step S1714, when the throughput has deteriorated (step S1714: Yes), the eNB 610 restores the CQI transmission power of the target UE to the pre-adjustment CQI transmission power of the target UE (step S1720). The pre-adjustment CQI transmission power of the target UE is, for example, the CQI transmission power of the target UE held in step S1107 illustrated in FIG. 11.

Further, the eNB 610 turns OFF the CQI transmission power adjustment execution flag (down) of the target UE (step S1721). Further, the eNB 610 initializes the number of times of throughput no-change check trials of the target UE (step S1722). That is, the eNB 610 resets the number of times of throughput no-change check trials of the target UE to 0. Further, the eNB 610 clears throughput of the target UE held in step S1107 illustrated in FIG. 11 (step S1723) and ends a series of processings for the target UE.

Thus, when the adjustment of the CQI transmission power is performed, the eNB 610 compares pre-adjustment and post-adjustment throughputs with each other, and based on a result the comparison, restores the CQI transmission power to the pre-adjustment CQI transmission power if there are no effects of the adjustment of the CQI transmission power. Thus, continuous adjustment of the CQI transmission power despite no improvements of the throughput by adjustment of the CQI transmission power may be avoided and thereby control of the transmission power of each UE may be stabilized.

The number of times of throughput improvement check trials used in step S1704 may be set according to the cycle of the CQI transmission timing of the target UE. For example, the number of times of throughput improvement check trials is set larger as the cycle of the CQI transmission timing of the target UE is shorter. In this case, as the cycle of the CQI transmission timing of the target UE is shorter, adjustment width of the CQI transmission power may be made smaller.

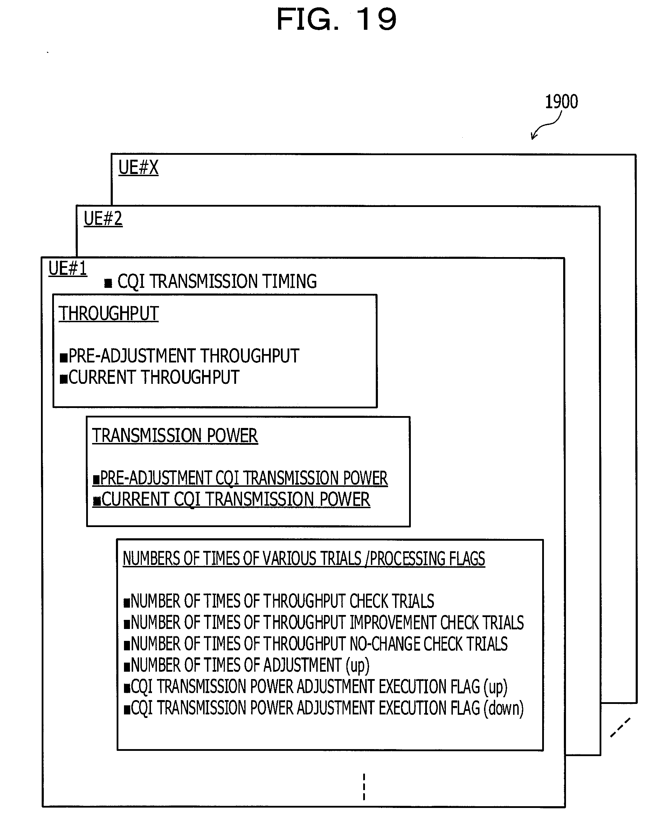

FIG. 19 is a diagram illustrating an example of information of each of UEs stored by the eNB according to the embodiment. The eNB 610 stores, for example, UE information 1900 illustrated in FIG. 19 in the memory as information of each of UEs. The UE information 1900 includes, for each of UEs (UE #1 to UE #X) coupled to the cell of the base station, the CQI transmission timing, throughput, transmission power and the numbers of times of various trials and processing flags. The CQI transmission timing is a timing (CQI transmission cycle) when a corresponding UE transmits the CQI to the eNB 610.

The throughput includes pre-adjustment throughput of the CQI transmission power for the target UE and current throughput (post-adjustment throughput of CQI transmission power). The pre-adjustment throughput of the CQI transmission power for the target UE is, for example, the throughput held in step S1107 illustrated in FIG. 11. The current throughput (post-adjustment throughput of CQI transmission power) of the target UE is, for example, the throughput calculated in step S1107 illustrated in FIG. 17 and FIG. 18.

The transmission power includes the pre-adjustment CQI transmission power for the target UE and current (post-adjustment) CQI transmission power of the target UE. The pre-adjustment CQI transmission power for the target UE is, for example, the CQI transmission power held in step S1107 illustrated in FIG. 11. The current (post-adjustment) transmission power of the target UE is, for example, the post-adjustment CQI transmission power calculated in steps S1108, S1110 and S1111 illustrated in FIG. 11.

The numbers of times of various trials and processing flags include the number of times of throughput check trials, the number of times of throughput improvement check trials, the number of times of throughput no-change check trials, the number of times of adjustment (up), CQI transmission power adjustment execution flag (up) and CQI transmission power adjustment execution flag (down). The number of times of throughput check trials is counted up, for example, in step S1104 illustrated in FIG. 11. The number of times of throughput check trials is initialized, for example, in step S1106 illustrated in FIG. 11.

The number of times of throughput improvement check trials is counted up, for example, in step S1105 illustrated in FIG. 17 and FIG. 18 with the default Value of 0. The number of times of throughput no-change check trials is counted up, for example, in step S1716 illustrated in FIG. 17 and FIG. 18 with the default value of 0. The number of times of adjustment (up) is counted up every time the eNB 610 shifts, for example, to step S1206 illustrated in FIG. 12, with the default value of 0.

The CQI transmission power adjustment execution flag (up) is set ON, for example, in step S1109 illustrated in FIG. 11 with the default value of OFF. The CQI transmission power adjustment execution flag (up) is set OFF, for example, in steps S1707 and S1710 illustrated in FIG. 17 and FIG. 18. The CQI transmission power adjustment execution flag (down) is set ON, for example, in step S1112 illustrated in FIG. 11 with the default value of OFF. Further, the CQI transmission power adjustment execution flag (down) is set OFF, for example, in steps S1717 and S1721 illustrated in FIG. 17 and FIG. 18.

Thus, the eNB 610 according to the embodiment adjusts the CQI transmission power from the target UE based on the CQI transmission power from each of UEs whose CQI transmission timing is the same as the target UE. Thus, the transmission power of each of CQIs multiplexed in the same timing may be matched, and thereby interference among the CQIs may be reduced. Therefore, decrease in the AFC accuracy based on the CQI may be suppressed especially in an overcrowded communication environment with high cell in/out traffic, or in an environment where many CQIs are multiplexed in the PUCCH.

As described above, the base station apparatus may suppress decrease in the AFC accuracy. Although the above embodiment is described by using a predetermined signal used in the AFC as an example, the predetermined signal used in the AFC is not limited to the CQI. For example, the predetermined signal used in the AFC may be a signal which is periodically multiplexed and transmitted at the same timing by a plurality of terminal devices.

### REFERENCE SIGNS LIST

- 100: communication system
- 110: base station apparatus
- 111: reception processing unit
- 112: adjustment unit
- 121, 122: terminal device
- 201, 205: base band processing unit
- 202: transmission RF processing unit/RRH unit
- 203, 301, 302, 404, 501, 611: antenna
- 204: reception RF processing unit/RRH unit
- 206: scheduler
- 207: apparatus control unit
- 303, 503: interface circuit
- 304, 502: RF circuit
- 311, 321: DSP
- 312, 332, 341: FPGA
- 313, 322, 333, 505: memory
- 331, 504: CPU
- 342: DAC/ADC
- 343: mixer
- 344: PA/LNA
- 401: application unit
- 402: base band transmission and reception processing unit
- 403: RF processing unit
- 600: radio communication system
- 601 to 606: cell
- 610: eNB
- 612, 613, 615, 616: RRH
- 614: femto base station
- 631 to 635: UE
- 641 to 643: UE group
- 800: bandwidth
- 801, 802: PUCCH
- 803: PUSCH
- 901, 902: UL signal
- 1000: radio resource
- 1010: frame
- 1020: sub-frame
- 1030: slot
- 1050: resource block
- 1061, 1062: CQI transmission timing
- 1071, 1072: timing
- 1900: UE information

### CITATION LIST

### Patent Literature

Japanese Laid-open Patent Publication No. 2014-49841
Japanese Laid-open Patent Publication No. H07-107033
Japanese Laid-open Patent Publication No. 2014-127976
Japanese Laid-open Patent Publication No. 2011-160376
International Publication Pamphlet No. WO2006/085365

## Claims

1. A base station apparatus, the apparatus comprising:
a memory; and
a processor coupled to the memory and configured to execute reception processing, the reception processing including
a process of receiving a predetermined signal from a target terminal device among a plurality of terminal devices by a control channel, the control channel being adapted to multiplex the predetermined signal transmitted from the target terminal device with one or more predetermined signals transmitted from any of the plurality of terminal devices except for the target terminal device, and
a process of performing automatic frequency control, based at least in part on the predetermined signal received from the target terminal device, for a data signal received from the target terminal device, and
execute adjustment processing, the adjustment processing including
a process of performing adjustment of a first transmission power of the predetermined signal in the target terminal device based at least in part on a second transmission power of the one or more predetermined signals in the any of the plurality of terminal devices.

2. The base station apparatus according to claim 1,
wherein in a case that reception quality of the data signal subjected to the automatic frequency control by the reception processing is lower than a predetermined reception quality, the second transmission power used in the adjustment processing is a transmission power having a largest transmission power among the one or more predetermined signals transmitted from the any of the plurality of terminal devices.

3. The base station apparatus according to claim 2,
wherein the adjustment processing includes
performing the adjustment of increasing the first transmission power of the predetermined signal in the target terminal device such that the first transmission power of the predetermined signal becomes equal to the second transmission power having a largest transmission power among the one or more predetermined signals transmitted from the any of the plurality of terminal devices.

4. The base station apparatus according to claim 2,
wherein the adjustment processing includes
in a case that none of the one or more of predetermined signals have a transmission power higher than the transmission power of the predetermined signal in the target terminal device, not performing the adjustment even when the reception quality of the data signal subjected to the automatic frequency control by the reception processing unit is lower than the predetermined reception quality.

5. The base station apparatus according to claim 2,
wherein the adjustment processing includes
in a case that the target terminal device is moving at a speed equal to or higher than at a predetermined speed, not performing the adjustment even when reception quality of the data signal is lower than the predetermined reception quality.

6. The base station apparatus according to claim 1,
wherein the adjustment processing includes
in a case that reception quality of the data signal subjected to the automatic frequency control by the reception processing is equal to or higher than a predetermined reception quality while transmission power of the predetermined signal in the target terminal device is largest among transmission powers of the one or more predetermined signals in the any of the plurality of terminal devices, performing adjustment of decreasing the transmission power of the predetermined signal in the target terminal device.

7. The base station apparatus according to claim 1,
wherein the adjustment processing includes
when the adjustment of the transmission power of the predetermined signal in the target terminal device is performed, comparing reception qualities of the data signal subjected to the automatic frequency control by the reception processing before and after the adjustment with each other, and, based at least in part on a result of the comparison, restoring the transmission power of the predetermined signal in the target terminal device to the transmission power of the predetermined signal in the target terminal device before the adjustment.

8. The base station apparatus according to claim 1,
wherein the adjustment processing includes
when adjusting the transmission power of the predetermined signal in the target terminal device, setting adjustment speed of the transmission power of the predetermined signal in the target terminal device based at least in part on a type of the data signal from the target terminal device to the base station apparatus.

9. The base station apparatus according to claim 1,
wherein the adjustment processing includes
when adjusting the transmission power of the predetermined signal in the target terminal device, setting adjustment speed of the transmission power of the predetermined signal in the target terminal device based at least in part on a type of the data signal from the target terminal device to the base station apparatus and a type of a data signal from the any of the plurality of terminal devices to the base station apparatus.

10. The base station apparatus according to claim 1,
wherein the adjustment processing includes
when adjusting the transmission power of the predetermined signal in the target terminal device, setting adjustment speed of the transmission power of the predetermined signal in the target terminal device based at least in part on a number of times the adjustment processing for the target terminal device is executed.

11. The base station apparatus according to claim 1,
wherein the adjustment processing includes
performing the adjustment of each of the plurality of terminal devices, and
when adjusting transmission power of the predetermined signal in the target terminal device, setting adjustment speed of the transmission power of the predetermined signal in the target terminal device based at least in part on a number of times the adjustment processing for the target terminal device is executed and a number of times the adjustment processing for each of the any of the plurality of terminal devices.

12. The base station apparatus according to claim 1,
wherein the control channel includes a physical uplink control channel (PUCCH), and
wherein the predetermined signal includes a channel quality indicator (CQI).

13. A method for a base station apparatus, the method comprising:
executing reception processing, the reception processing including
a process of receiving a predetermined signal from a target terminal device among a plurality of terminal devices by a control channel, the control channel being adapted to multiplexing the predetermined signal transmitted from the target terminal device with one or more of a plurality of predetermined signals transmitted from any of the plurality of terminal devices except for the target terminal device, and
a process of performing automatic frequency control, based at least in part on the predetermined signal received from the target terminal device, for a data signal received from the target terminal device, and
executing adjustment processing, the adjustment processing including
a process of performing adjustment of a first transmission power of the predetermined signal in the target terminal device based at least in part on a second transmission power of the one or more of predetermined signals in the any of the plurality of terminal devices.
